(19) Europäisches Patentamt

European Patent Office

Office européen des brevets

(11) Veröffentlichungsnummer: **0 483 676 B1**

(12) **EUROPÄISCHE PATENTSCHRIFT**

(45) Veröffentlichungstag der Patentschrift: **12.04.95**

(21) Anmeldenummer: **91118209.5**

(22) Anmeldetag: **25.10.91**

(51) Int. Cl.⁶: **B29C 59/04**, B29C 55/06

(54) **Flächenhafter Formkörper mit wenigstens einseitig regelmässig strukturierter Oberfläche.**

(30) Priorität: **02.11.90 DE 4034869**

(43) Veröffentlichungstag der Anmeldung:
**06.05.92 Patentblatt 92/19**

(45) Bekanntmachung des Hinweises auf die
Patenterteilung:
**12.04.95 Patentblatt 95/15**

(84) Benannte Vertragsstaaten:
**DE LU**

(56) Entgegenhaltungen:
**EP-A- 0 229 670     EP-A- 0 230 633
EP-A- 0 311 426     EP-A- 0 315 478
EP-A- 0 399 492     WO-A-86/06024
GB-A- 2 190 020     US-A- 3 842 152**

**PATENT ABSTRACTS OF JAPAN** vol. 13, no. 105 (C-575)(3435) 13. März 1989 & JP-A-63 278 940 (TORAY INDUSTRIES INC.) 16. November 1988

**PATENT ABSTRACTS OF JAPAN** vol. 12, no. 455 (C-548)(3302) 29. November 1988 & JP-A-63 178 144 (TEIJIN LTD) 22. Juli 1988

(73) Patentinhaber: **HOECHST AKTIENGESELL-SCHAFT**

**D-65926 Frankturt (DE)**

(72) Erfinder: **Hagens, Hajo, Dr.
Guldenweg 12
W-6200 Wiesbaden (DE)**
Erfinder: **Dallmann, Hermann, Dr.
Erbsenacker 29
W-6200 Wiesbaden (DE)**

**Beschreibung**

Die vorliegende Erfindung betrifft einen selbsttragenden flächenhaften Formkörper aus Polymermaterial, der mindestens ein inertes Zusatzmittel in einer Menge im Bereich von 0,001 bis 5 Gew.-% enthält, und ein Verfahren zu dessen Herstellung.

Bei flächenhaften Formkörpern aus polymeren Werkstoffen wie Folien, Platten etc. führen unzureichende Gleit- und Reibungseigenschaften bei ihrer Produktion oder Weiterverarbeitung häufig zu einer Reihe unerwünschter Probleme, die vorrangig auf das Blocken beim Kontakt miteinander oder mit Führungs- bzw. Umlenkelementen zurückzuführen sind.

Zur Behebung dieses Mangels wurden bereits eine Reihe von Maßnahmen vorgeschlagen. Hierzu gehören die Einarbeitung von Inertpartikeln, die Beschichtung der Oberflächen mit Inertpartikel enthaltenden Rezepturen oder die Strukturierung der Oberflächen mittels mechanischer, chemischer oder physikalischer Verfahren. Gemeinsames Ziel all dieser Maßnahmen ist die Ausbildung von Erhebungen auf den Oberflächen der Formkörper, die eine Abstandshalterfunktion ausüben und damit ein Verblocken der einzelnen Lagen der Formkörper innerhalb von Stapeln abmildern bzw. ganz beheben sollen. Auch das Gleiten der Formkörper über Rollen bzw. in Kontakt mit Führungs- oder Umlenkelementen soll durch die Erhebungen auf den Oberflächen der Formkörper verbessert werden.

Die geschilderten Maßnahmen haben z. T. eine deutliche Verbesserung der Gleiteigenschaften der flächigen Substrate bewirkt, was sich auch positiv auf den Gebrauchswert der daraus hergestellten Gegenstände ausgewirkt hat. In der Praxis hat sich aber gezeigt, daß die erwähnten Maßnahmen, speziell bei hochwertigen Substraten wie orientierten Folien, mit einer Reihe unerwünschter Nachteile verbunden sind. Hinzu kommt, daß ein Teil der vorgeschlagenen Maßnahmen aus verfahrenstechnischen Gründen nur begrenzt anwendbar und außerdem sehr kostenintensiv ist.

Unerwünschte Nachteile, die z. B. aus der Einarbeitung von Inertpartikeln resultieren können, sind z. B. undefinierte Oberflächenstrukturen, unzureichende Abriebfestigkeiten, die einen Anstieg des Reibungskoeffizienten zur Folge haben können, hohe Trübungen, schlechte Schneidbarkeit, Beeinträchtigung der elektrischen Eigenschaften etc. Die Ursache hierfür können sowohl in der Natur der Inertpartikel selbst (z. B. unzureichende Härte oder Affinität zur Matrix, starke Tendenz zur Agglomeratbildung) als auch in den Aufbereitungs- und Einarbeitungsverfahren sowie den Verarbeitungsprozessen der damit ausgerüsteten Polymeren zu suchen sein.

Die z. B. in der US-A-4 725 472 beschriebenen, mit Hilfe von Inertpartikeln erzeugten Oberflächenstrukturen, die sich durch Erhebungen auszeichnen, die von Vertiefungen umgeben sind, haben den Nachteil, daß sie nicht gleichmäßig sind und weitgehend von der Größe und Menge der vorhandenen Inertpartikel abhängen, was ihre Gestalt als auch ihre Verteilung über die Oberfläche anbetrifft, außerdem sind sie nicht generell praktizierbar.

Dies trifft auch für die Verbesserung des Schlupfes über im Herstellungsprozeß von PET-Folien aufgebrachte Beschichtungsrezepturen zu, wie sie z. B. in der EP-A-0 153 853 beschrieben werden. Weiterhin sind die in den Beschichtungsrezepturen enthaltenen Zuschlagstoffe in ihrer chemischen Zusammensetzung häufig nicht mit dem Polymeren des Substrats identisch, wodurch bei der Verschnittverwertung Probleme auftreten.

In der WO-A-87/02173 werden durch Niedertemperatur-Plasmabehandlung erzeugte Oberflächenstrukturen beschrieben, die dem Substrat neben einem verbesserten Schlupf auch noch haftvermittelnde Eigenschaften gegenüber nachfolgend aufgebrachten Schichten verleihen sollen, und die US-A-4 247 496 betrifft Oberflächen von Substraten auf Polymerbasis, die mittels UV-Bestrahlung strukturiert werden. Beide Verfahren sind verfahrenstechnisch aufwendig und außerdem in Streckprozesse integriert bzw. verfahrensmäßig mit nachfolgenden Streckprozessen gekoppelt.

Aufgabe der vorliegenden Erfindung war es, gut handhabbare Flächengebilde wie Platten, Folien etc. mit schlupffördernden Oberflächen zu schaffen, bei denen die Schlupfeigenschaften in einfacher, reproduzierbarer Weise ohne Beeinträchtigung der übrigen Eigenschaften des selbsttragenden Substrats eingestellt werden können.

In der DE-A-40 15 658 wird bereits ein derartiges Verfahren zur Oberflächenstrukturierung orientierter Folien aus thermoplastischen Kunststoffen vorgeschlagen. Die nach diesem Verfahren hergestellten Folien sollen, abgesehen von Katalysatorpräzipitaten, die sich bei der Rohstoffherstellung bilden können, additivfrei sein. Hinweise auf eine gezielte Fällung der Katalysatorpräzipitate und damit Aussagen bezüglich ihrer Größe und Korngrößenverteilung derselben werden nicht getroffen.

Die der Erfindung zugrundeliegende Aufgabe wird durch einen Formkörper mit den Merkmalen des Anspruchs 1 gelöst.

Die Grundstruktur kann als viele miteinander verbundene Einzelstrukturen beschrieben werden, wobei die Einzelstrukturen eine weitgehend gleichförmige Konfiguration besitzen. Unter dem Begriff einer ≫weitgehend gleichförmigen Konfiguration≪ soll im Rahmen der vorliegenden Erfindung eine Strukturierung verstanden werden, bei der die einzelnen Strukturelemente nicht unregelmäßig und in rein zufälliger Formgebung nebeneinander angeordnet sind, sondern sie sollen sich in ihren wesentlichen geometrischen Abmessungen, der Form und Lage in der Ebene, der Größe und der Erhebung über die Folienebene hinaus soweit ähnlich sein, daß bei einem unvoreingenommenen Betrachter der Eindruck einer Regelmäßigkeit entsteht, hervorgerufen durch immer wiederkehrende und als gleich identifizierbare Elementarzellen. Der mittlere Durchmesser $d_m$ der besagten Elementarzellen soll erfindungsgemäß im Bereich von 10 bis 800 $\mu$m liegen, vorzugsweise von 20 bis 400 $\mu$m, wobei der mittlere Durchmesser bestimmt wird gemäß

$$d_m = \frac{d_{max} + d_{min}}{2}$$

mit

$d_{max}$ = Durchmesser der Elementarzelle an der breitesten Stelle und
$d_{min}$ = Durchmesser der Elementarzelle an der schmalsten Stelle.

Das Längen- zu Breitenverhältnis der Elementarzellen liegt hierbei im Bereich von

$$0,1 \leq \frac{d_{min}}{d_{max}} \leq 1.$$

Die erfindungsgemäße Grundstruktur ist so ausgebildet, daß die Verformungen der Oberfläche sich etwa 0,01 bis 15,0 $\mu$m über die tiefsten Bereiche erheben, vorzugsweise 0,1 bis 5,0 $\mu$m.

Für die flächenhaften Formkörper können im Rahmen der vorliegenden Erfindung prinzipiell alle Materialien eingesetzt werden, bei denen die eingangs erwähnten Schwierigkeiten bei der Verarbeitung infolge zu glatter Oberflächen bestehen, insbesondere Polymere, die zu Folien oder Platten geformt werden können.

Beispiele für Polymere sind natürliche und synthetische Polymere wie Cellulose, Celluloseester, Polyvinylchlorid, Polystyrol, Styrolcopolymere, Polycarbonat, Polymere und Copolymere von Olefinen wie Ethylen, Propylen, Butylen, Methylpenten usw., Polysulfon, aliphatische und aromatische Polyester, Polyimide, Polyisobutylen, Polymethylmethacrylat, Polyphenylensulfid, Polyurethan, Polyamid, Polyaryletherketon, Polyaryletheretherketon, Polyarylethersulfon, Polyamidimid, Polyetherimid usw. (vgl. Ullmans Enzyklopädie der technischen Chemie, Verlag Chemie, Weinheim, 4. neubearbeitete und erweiterte Auflage (1976), Seite 673 ff; Encyclopedia of Polymer Science and Eng., Vol. 7, John Wiley & Sons (1973), Seite 73 ff.).

Im Rahmen der durchgeführten Untersuchungen wurden schwerpunktmäßig Formkörper auf Polyesterbasis mit den erfindungsgemäßen Oberflächenstrukturen ausgerüstet.

Unter Polyester sind hierbei Homo- und Copolykondensate, Gemische verschiedener Polyester sowie Abmischungen oder Blends von Polyestern mit anderen Polymeren, gegebenenfalls, Harzen zu verstehen.

Die Herstellung der Polyester kann sowohl nach dem Umesterungsverfahren, z. B. mit Hilfe von Umesterungskatalysatoren wie z. B. Zn-, Mg-, Ca-, Mn-, Li- oder Ge-Salzen, wie auch nach dem Direktesterverfahren erfolgen, bei dem Antimonverbindungen als Polykondensationskatalysatoren und Phosphorverbindungen als Stabilisatoren verwendet werden. Ihr RSV-Wert liegt vorzugsweise im Bereich von 0,60 bis 0,90 dl/g.

Beispiele für Polyester sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybutylenterephthalat, Poly-1,4-cyclohexylen-dimethylenterephthalat, Polyethylen-2,6-naphthalindicarboxylat oder Polyethylen-p-hydroxy-benzoat.

Die Polyester können bis zu 30 Mol-% aus Comonomereinheiten aufgebaut sein, wobei eine Variation in der Glykol- und/oder der Säurekomponente möglich ist. Als Säurekomponente können die Copolyester u. a. Adipinsäure, Glutarsäure, Bernsteinsäure, Sebazinsäure, Phthalsäure, Isophthalsäure, 5-Na-sulfoisophthalsäure oder polyfunktionelle Säuren wie Trimelitsäure u. a. enthalten.

Die Polyestergemische können aus Polyester-Homopolymeren, Polyester-Copolymeren oder Polyester-Homo- und -Copolymeren bestehen. Beispiele hierfür sind Abmischungen von Polyethylenterephthalat/Polybutylenterephthalat, Polyethylenterephthalat/Polyethylennaphthalat, Polyethylenterephthalat/Polyethylenisophthalat oder Polyethylenisophthalat/5-Natriumsulfoisophthalat.

Beispiele für Polymere, die der Polyester enthalten kann, sind Polyolefin-Homo- oder -Copolymere wie Polyethylen, Polypropylen, Poly-4-methylpenten, Ethylen-Vinylacetat-Copolymere, die ihrerseits verseift sein können, Ionomere, Polyamide, Polylactone, Polycarbonate, Polytetrafluorethylen, Polysulfone u. a. Diese Substanzen können während der Rohstoff- oder Folienherstellung in den Polyester eingearbeitet werden.

Bei den Harzen handelt es sich um natürliche oder synthetische niedermolekulare Harze mit einem Erweichungspunkt im Bereich von 60 bis 180 °C, bestimmt nach ASTM E 28. Von den zahlreichen niedermolekularen Harzen sind die Kohlenwasserstoffharze, insbesondere die Erdölharze (Petroleumharze), Styrolharze, Cyclopentadienharze und Terpenharze bevorzugt.

Die guten Schlupfeigenschaften der erfindungsgemäßen selbsttragenden flächigen Formkörper werden durch Kombination der Wirkung einer mittels einer speziellen Walze aufgebrachten regelmäßigen Oberflächenstruktur und der Wirkung geringer Mengen anorganischer und/oder organischer Zusatzmittel, die dem Polymeren während der Rohstoff- oder Substratherstellung zugesetzt werden, erzielt.

Unter den Begriff inerte Zusatzmittel fallen hierbei anorganische und organische Inertpartikel sowie organische, vorzugsweise schlupffördernde Substanzen, die allein oder in Kombination miteinander in dem Formkörper vorhanden sein können.

Zusätzlich zu den vorzugsweise schlupffördernden Zusatzmitteln kann der selbsttragende flächige Formkörper noch Nukleierungsmittel, Antioxidantien, Thermostabilisatoren, UV-Stabilisatoren, Antistatika, flammhemmende Additive, Farbstoffe etc. enthalten.

Beispiele für inerte Zusatzmittel, die allein, in Kombination miteinander oder mit einem organischen Additiv eingesetzt werden können, sind alle $SiO_2$-Typen einschließlich der Hydrate, Metalloxid-Partikel wie z. B. die in der EP-A-0 236 945 und der US-A-4 567 030 beschriebenen sphärischen Partikel mit enger Korngrößenverteilung, Sulfate, Phosphate und Carbonate der Erdalkalimetalle, Silikate mit einem $SiO_2$-Gehalt > 30 Gew.-%, Kohlenstoff, Glas in Form von Pulvern und Perlen sowie organische, vorzugsweise kugelförmige Partikel mit enger Korngrößen-Verteilung, die vernetzt oder gehärtet sein können. Beispiele hierfür sind die in der EP-A-0 125 482 beschriebenen Typen.

Alternativ oder in Ergänzung hierzu können auch die während der Herstellung bestimmter Polymerer, z. B. von Polyestern, gezielt gefällten Katalysatorpräzipitate verwendet werden. Bevorzugt werden aber externe Inertpartikel, die aufgrund ihrer Aufbereitung oder Herstellung eine weitgehend einheitliche Gestalt und enge Korngrößenverteilung aufweisen.

Die Auswahl der jeweils einzusetzenden Inertpartikel richtet sich nach dem Anforderungsprofil des herzustellenden Formkörpers. So werden z. B. für optisch hochwertige Formkörper Inertpartikel mit einem auf die Matrix abgestimmten Brechungsindex, für Formkörper mit begrenzter Lichtdurchlässigkeit vorzugsweise kohlenstoffhaltige Partikel ausgewählt.

Zur Verbesserung der Affinität der Inertpartikel zur Matrix können die Inertpartikel mittels bekannter Methoden oberflächenmodifiziert sein.

Die Inertpartikel haben einen mittleren Durchmesser im Bereich von 0,001 bis 5 $\mu$m, vorzugsweise von 0,05 bis 2,5 $\mu$m.

Die Konzentrationen bewegen sich im Bereich von 0,005 bis 5 Gew.-%, bei orientierten und eventuell thermofixierten, flächigen Formkörpern wie Folien vorzugsweise im Bereich von 0,01 bis 1 Gew.-%.

Beispiele für schlupffördernde Additive sind die in der EP-A-0 132 951 beschriebenen aliphatischen Monocarbonsäuren und deren Derivate, vorzugsweise ihre Ester sowie Mono- und Bisamide und Alkali- oder Erdalkalimetallsalze, Polysiloxane, Polyether- und Polyestersiloxane, Glycerinester etc., die wie die Inertpartikel allein oder in Kombination mit denselben in den Formkörpern vorhanden sein können. Die Konzentration der schlupffördernden organischen Additive liegt im Bereich von 0,005 bis 2 Gew.-%.

Die Erfindung betrifft auch ein Verfahren zur Herstellung der vorstehend beschriebenen selbsttragenden, flächigen Formkörper, nach dem das Polymer in gelöster oder geschmolzener Form mittels eines Fließers oder einer Düse in ein flächiges Gebilde überführt und dieses vor oder nach Entfernung des restlichen Lösungsmittels bzw. in über die Glastemperatur erwärmtem Zustand mit wenigstens einer Walze in Berührung gebracht wird, die auf ihrer Oberfläche eine Vielzahl von regelmäßigen Strukturen weitgehend gleichmäßiger Konfiguration mit einem Längenzu-Breitenverhältnis von

$$0,05 \quad \leq \quad \frac{d_{min}}{d_{max}} \leq 1$$

aufweist und deren Einzelstrukturen eine Höhe im Bereich von 0,5 bis 100 $\mu$m und eine größte Ausdehnung in der die Walzenoberfläche beschreibenden Ebene von weniger als 300 $\mu$m besitzt. Ganz allgemein muß die Struktur der Walze so gewählt werden, daß sie unter Berücksichtigung der nachfolgenden Streckparameter (Temperatur, Streckverhältnis) zu den oben beschriebenen Grundstrukturen der Folien führt.

Bei flächigen, orientierten Formkörpern wie Folien kann der Kontakt mit der strukturierten Walze im unverstreckten Zustand, zwischen den einzelnen Streckstufen oder vor, während oder nach der Fixierung erfolgen.

Die mittels mechanischer Verfahren oder Laserstrahlen strukturierte Walze, die mit Keramik, Metallcarbiden etc. beschichtet sein kann, wie es u. a. in der EP-A-0 230 633 beschrieben wird, kann zusätzlich beheizt sein.

Über die Temperatur der strukturierten Walze lassen sich die Geometrie und die Güte der Oberflächenstrukturen auf den selbsttragenden flächigen Formkörpern gezielt einstellen.

Als vorteilhaft hat sich besonders bei kleinen Umschlingungswinkeln, d. h. nur sehr kurzzeitigem Kontakt der Formkörper mit der strukturierten Walze, erwiesen, den selbsttragenden flächigen Formkörper mittels einer zweiten Walze gegen die temperierte, strukturierte Walze zu pressen.

Für den Fall, daß eine beidseitige Strukturierung des Formkörpers angestrebt wird, kann diese zweite Walze gegebenenfalls ebenfalls strukturiert sein. Alternativ kann auch eine zweite (weitere) strukturierte Walze, mit der die zweite Seite des flächigen Formkörpers in Berührung steht, verwendet werden, wobei der Formkörper wieder mittels einer weiteren Walze gegen diese strukturierte Walze gepreßt werden kann.

Die aus den Streckverfahren resultierenden Folien können bevorzugt in einer Richtung eine Festigkeit aufweisen (monoaxial gestreckt), in beiden Richtungen ausgewogene mechanische Eigenschaften aufweisen (balanced Folien) oder in Querrichtung und/oder Längsrichtung besondere Festigkeiten aufweisen (tensilized oder supertensilized Folien).

Sie können im Anschluß an den Streckprozeß bei Temperaturen im Bereich von 150 und 260 °C hitzefixiert sein.

Die Anzahl und Reihenfolge der Längs- und Querstreckstufen ist nicht fest vorgegeben, sondern richtet sich nach den Erfordernissen. Die einzelnen Streckvorgänge "längs" und "quer" können ein- oder mehrstufig durchgeführt werden. Eine gleichzeitige Längs- und Querstreckung (Simultanstreckung) ist ebenso möglich.

Die optischen Eigenschaften der Folienoberflächen, d.h. ihre Trübung, ihr Glanz und ihr Reflexionsvermögen, können im Gegensatz zu der Methode der Oberflächenstrukturierung allein mit Hilfe von Zusatzstoffen erfindungsgemäß gezielt durch die Wahl der Geometrie der Strukturen der speziellen Walze in Kombination mit der Wahl der einzelnen Verfahrensparameter in weiten Grenzen variiert werden. Zum Beispiel kann bei mehrstufiger Längsstreckung und einer dabei zwischen den einzelnen Längsstreckstufen stattfindenden Strukturierung der Folie bei gegebener Ausführung der Streckwalze über eine zielgerichtete Verteilung der Einzelstreckfaktoren auf die Einzellängsstreckstufen gezielt die Strukturierung variiert werden.

Im folgenden soll die Erfindung beispielhaft anhand von Ausführungsbeispielen näher erläutert werden.

Die in den Beispielen angegebenen Parameter sind insbesondere auf die folgende Art und Weise bestimmt worden.

1. RSV-Wert:

Der Wert gibt die reduzierte spezifische Viskosität an; er wurde nach DIN 53 728, Blatt 2, gemessen.

2. Bestimmung der Oberflächenstrukturen der Folien, d.h. Geometrie der miteinander verbundenen Elementarzellen:

Der breiteste und der schmalste Durchmesser ($d_{max}$; $d_{min}$) einer Elementarzelle wurde mittels Differential-Interferenz-Kontrast-Mikroskop-Aufnahmen bestimmt. Der Abstand zwischen der höchsten und der tiefsten Stelle einer Elementarzelle wurde mittel eines Hommel-Gerätes T20DC bestimmt, wobei 50 nebeneinanderliegende Einzelschriebe der strukturierten Oberfläche der Folie aufgenommen wurden.

3. Trübung:

Die Oberflächentrübung ergibt sich als Differenz aus Gesamt- und Volumentrübung, wobei die Gesamttrübung in Anlehnung an ASTM 1003-52 und die Volumentrübung nach vollständiger Einbettung der Folie in Immersionsöl für Mikroskopie [Brechungsindex ($n_D^{20°}$) etwa 1,516] der Fa. Merck, Darmstadt ermittelt wurden.

4. $F_5$-Longitudinalwert:

Der Wert gibt die auf den Prüfkörperquerschnitt bezogene Kraft an, die für eine 5%ige Dehnung des Prüfkörpers erforderlich ist. Die Messung erfolgte gemäß DIN 53 455.

5. E-Modul:

Der Elastizitätsmodul wurde nach DIN 53 457 gemessen. $F_5$-Wert und E-Modul wurden mit einem ZWICK-Gerät Typ 1445 bestimmt, wobei die Meßlänge 100 mm, die Streifenbreite 15 mm und die Abzugsgeschwindigkeit 10 mm/min (E-Modul) bzw. 100 mm/min betrugen. Die angegebenen Werte basieren auf fünf Einzelmessungen.

6. Reibung:

Die Reibungszahl gibt den Schlupf der Folie an. Er wurde gemessen nach DIN 53 375.

Ausführungsbeispiel 1

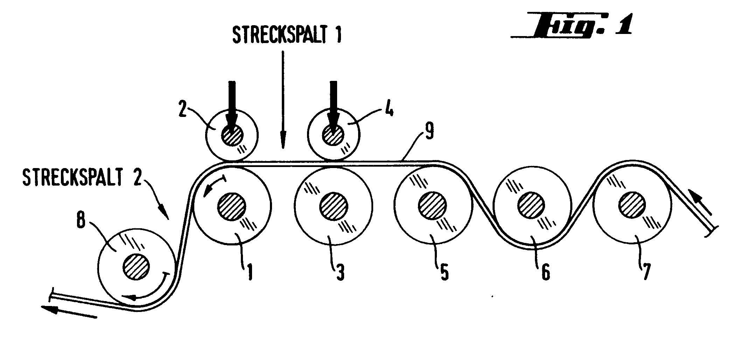

Eine Polyethylenterephthalatschmelze, die ausschließlich Reste von Katalysatoren und Stabilisatoren enthielt, aber keine zuzätzlichen inerten Teilchen, und eine Intrinsicviskosität von 0,65 dl/g besaß, wurde auf einer Gießtrommel zu einer amorphen Folie extrudiert. Diese Folie wurde dann zwischen Rollen, die mit unterschiedlicher Umfangsgeschwindigkeit liefen, um das 3,5fache im Streckspalt 2 gestreckt (vgl. Figur 1, die das verwendete Streckaggregat skizziert). An die Längsstreckung schloß sich eine Querstreckung um den Faktor 3,8 bei 95 °C an. Anschließend wurde die biaxial verstreckte Folie bei 205 °C thermofixiert. Die Endfoliendicke betrug ca. 13 $\mu$m.

In Figur 1 stellt die Walze 1 die Streckwalze dar, von der die Folie ablief und anschließend im Streckspalt 2 in Längsrichtung verstreckt wurde. Die Streckwalzentemperatur betrug 107 °C.

Die Streckwalze 1 besaß eine $Cr_2O_3$-Beschichtung. Die Walzenoberfläche war mit einem Laser derart behandelt worden, daß pro Quadratmillimeter der Oxidbeschichtung ca. 450 gleichmäßig große Schmelzenäpfchen erzeugt worden waren. Gegen die dergestalt ausgeführte Streckwalze 1 wurde die vorgewärmte, unorientierte Folie 9 unmittelbar vor der Längsverstreckung mit einer Anpreßwalze 2 gepreßt. Die Walzen 3, 5, 6 und 7 in Figur 1 stellen Vorwärmwalzen und die Walze 4 eine weitere Anpreßwalze dar. Die Walze 8 hat die Funktion einer Kühlwalze.

Ausführungsbeispiel 2

Gegenüber Beispiel 1 wurde ein mit 300 ppm sphärischen, monodispersen $SiO_2$-Partikeln, wie sie in der EP-A-0 236 945 beschrieben werden, ausgerüsteter PET-Rohstoff eingesetzt.

Ausführungsbeispiel 3

Gegenüber dem Beispiel 2 wurde die Konzentration der sphärischen, monodispersen $SiO_2$-Partikel auf 500 ppm angehoben.

Ausführungsbeispiel 4

Gegenüber dem Beispiel 2 wurde ein Rohstoff eingesetzt, der 300 ppm der sphärischen, monodispersen $SiO_2$-Partikel und 750 ppm Pentaerithrit-4-stearat enthielt.

Ausführungsbeispiel 5

Gegenüber dem Beispiel 2 wurde ein Rohstoff eingesetzt, der 2000 ppm hochdisperses $SiO_2$ mit einer Primärkorngröße von 40 nm enthielt, das über ein 8 Gew.-%iges Polyethylenterephthalat-Masterbatch während der Polyesterherstellung eingearbeitet wurde. Die aus der Schmelze extrudierte Folie wurde im Streckspalt 1 bei 121 °C um das 1,5-fache und im Streckspalt 2 bei 115 °C um das 2,4-fache längsgestreckt, anschließend bei 90 °C um den Faktor 3,8 quer- und nochmals bei einer Temperatur von 130 °C um den Faktor 2 längsgestreckt. Die Fixierung der ca. 9 $\mu$m dicken Folien erfolgte bei 220 °C.

Ausführungsbeispiel 6

Gegenüber Beispiel 1 wurde ein Polyesterrohstoff eingesetzt, der mit 300 ppm Kaolin mit einer mittleren Korngröße von 1,8 $\mu$m ausgerüstet war, und die amorphe Polyesterfolie in einem Längsstreckwerk entsprechend Figur 1 im Streckspalt 1 um den Faktor 3 und im Streckspalt 2 um den Faktor 1,05 in Maschinenrichtung verdehnt, wobei die Walze 1 (Figur 1) eine $Cr_2O_3$-beschichtete, mit einem Laser bearbeitete Walze mit ca. 100 gleichmäßig großen Schmelzenäpfchen pro Quadratmillimeter (auf der Walzenoberfläche) war.

Die Eigenschaften aller Folien sind in der Tabelle 1 aufgeführt. Der Einfluß der zugesetzten Inertpartikel wird besonders deutlich bei einem Vergleich der Reibungszahlen der Beipiele 1 und 3, die unter analogen Verfahrensbedingungen hergestellt wurden, jedoch mit dem Unterschied, daß in Beispiel 1 ein Rohstoff ohne Inertpartikel und in Beispiel 3 ein Rohstoff mit Inertpartikeln eingesetzt wurde. Durch den Zusatz kleiner Mengen von Inertpartikeln wird die Reibungszahl und damit auch der Reibungskoeffizient deutlich reduziert, d. h. der Schlupf der mittels der lasergravierten Walze oberflächenstrukturierten Folie wesentlich verbessert. Das Reibungsverhalten kann durch einen Zusatz schlupffördernder organischer Additive bei Bedarf zusätzlich verbessert werden wie aus Beispiel 4 ersichtlich. Die Trübung der Folie wird durch den Zusatz der anorganischen Inertpartikel nur geringfügig beeinträchtigt.

Beispiel 6 verdeutlicht, daß bei Auswahl geeigneter Verfahrensparameter gezielt sehr hohe Oberflächentrübungswerte bei gleichzeitig hoher Transparenz erreicht werden können, wobei - wie hier gezeigt - auch eine Anisotropie der optischen Eigenschaften der Folienoberfläche eingestellt werden kann. Dies wird durch kleine Verhältnisse $d_{min}/d_{max}$ erreicht; im vorliegenden Beispiel betrug $d_{min}$ ungefähr 120 $\mu$m, und $d_{max}$ ungefährt 350 $\mu$m; hieraus berechnet sich der mittlere Durchmesser einer Elementarzelle zu $d_m$ ungefähr 235 $\mu$m und $d_{min}/d_{max}$ ungefähr 0,34.

Tabelle 1 : Eigenschaften der Folien aus den Ausführungsbeispielen 1 bis 6

| Ausführungsbeispiel Nr. | | 1 | | 2 | | 3 | | 4 | | 5 | | 6 | |
|---|---|---|---|---|---|---|---|---|---|---|---|---|---|
| **Typ / Dicke** | | balanced 12,8 µm | | balanced 13,7 µm | | balanced 13,6 µm | | balanced 13,2 µm | | super-tensilized 9,1 µm | | balanced 9,0 µm | |
| **Mechanische u. optische Eigenschaften** | | längs | quer | längs | quer | längs | quer | längs | quer | längs | quer | längs | quer |
| Spannung bei 3 % | N/mm² | 98 | 110 | 101 | 95 | 100 | 110 | 100 | 110 | 157 | 94 | 99 | 107 |
| Spannung bei 5 % | N/mm² | 114 | 127 | 119 | 111 | 116 | 129 | 113 | 125 | 204 | 107 | 115 | 117 |
| Bruchspannung | N/mm² | 202 | 261 | 250 | 130 | 258 | 282 | 200 | 250 | 437 | 189 | 210 | 259 |
| Bruchdehnung | % | 72 | 88 | 81 | 247 | 87 | 86 | 87 | 87 | 31 | 130 | 74 | 88 |
| E-Modul | N/mm² | 4565 | 6073 | 4827 | 5951 | 4696 | 5903 | 4900 | 5800 | 8460 | 4271 | 4611 | 5901 |
| Haftreibung l/l | | 100 | 100 | 32 | 27 | 27 | 28 | 23 | 24 | 33 | 41 | 44 | 41 |
| Haftreibung A/A | | 100 | 100 | 30 | 28 | 26 | 25 | 24 | 23 | 49 | 51 | 39 | 38 |
| Gleitreibung l/l | | 100 | 100 | 32 | 29 | 26 | 26 | 25 | 23 | 33 | 37 | 37 | 40 |
| Gleitreibung A/A | | 100 | 100 | 33 | 29 | 27 | 26 | 23 | 25 | 46 | 45 | 33 | 35 |
| Oberflächentrübung | % | 0,5 | 0,5 | 1,0 | 1,0 | 1,0 | 1,0 | 2,0 | 2,0 | 2,8 | 1,5 | 13,7 | 24,1 |
| Gesamttrübung | % | 1,5 | 2,0 | 2,0 | 2,5 | 2,0 | 2,5 | | | | | 15,2 | 25,6 |
| Transparenz | % | 87,0 | | 87,0 | | 87,0 | | 87,0 | | 87,0 | | 90,0 | |
| Additiv | ppm | - | | 300 SiO₂ Ø 0,5 µm | | 500 SiO₂ Ø 0,5 µm | | 300 SiO₂ Ø 0,5 µm plus 750 organisches Gleitmittel | | 2000 SiO₂ Ø 0,04 µm | | 300 Kaolin Ø 1,8 µm | |

**Patentansprüche**

1. Selbsttragender flächenhafter Formkörper aus Polymermaterial, der mindestens ein inertes Zusatzmittel in einer Menge im Bereich von 0,001 bis 5 Gew.-% enthält, dadurch gekennzeichnet, daß er

8

wenigstens einseitig eine Grundstruktur aus den Polymeren des Formkörpers aufweist, aus der einzelne, durch das inerte Zusatzmittel verursachte, statistisch verteilte Erhebungen herausragen, wobei sich diese Grundstruktur 0,01 bis 15 $\mu$m, vorzugsweise 0,1 bis 5,0 $\mu$m über die tiefsten Bereiche der jeweiligen Oberfläche erhebt und aus in Längs- und Querrichtung angeordneten, vorzugsweise miteinander verbundenen Elementarzellen weitgehend gleichmäßiger Konfiguration besteht, deren mittlerer Durchmesser

$$d_m = \frac{d_{max} + d_{min}}{2}$$

mit

$d_{max}$ = Durchmesser der Elementarzelle an der breitesten Stelle und
$d_{min}$ = Durchmesser der Elementarzelle an der schmalsten Stelle.
im Bereich von 10 bis 800 $\mu$m, vorzugsweise im Bereich von 20 bis 400 $\mu$m liegt und deren Verhältnis von minimalem zu maximalem Durchmesser im Bereich von

$$0,1 \leq \frac{d_{min}}{d_{max}} \leq 1$$

liegt.

2. Formkörper nach Anspruch 1, dadurch gekennzeichnet, daß er die Form von Folien oder Platten besitzt und aus natürlichen und/oder synthetischen Polymeren aufgebaut ist ausgewählt aus der Gruppe Cellulose, Celluloseester, Polyvinylchlorid, Polystyrol, Styrolcopolymere, Polycarbonat, Polymere und Copolymere von Olefinen wie Ethylen, Propylen, Butylen, Methylpenten usw., Polysulfon, aliphatische und aromatische Polyester, Polyimide, Polyisobutylen, Polymethylmethacrylat, Polyphenylensulfid, Polyurethan, Polyamid, Polyaryletherketon, Polyaryletheretherketon, Polyarylethersulfon, Polyamidimid, Polyetherimid.

3. Formkörper nach Anspruch 1 oder 2, dadurch gekennzeichnet, daß er eine Folie aus Polyester, insbesondere aus Polyethylenterephthalat ist.

4. Formkörper nach einem der Ansprüche 1 bis 3, dadurch gekennzeichnet, daß als inerte Zusatzmittel anorganische und organische Inertpartikel sowie organische, vorzugsweise schlupffördernde Substanzen, möglich sind, die allein oder in Kombination miteinander in dem Formkörper vorhanden sein können.

5. Formkörper nach einem der Ansprüche 1 bis 4, dadurch gekennzeichnet, daß als inerte Zusatzmittel $SiO_2$, Metalloxid-Partikel, insbesondere mit sphärischer Konfiguration in enger Korngrößenverteilung, Sulfate, Phosphate und Carbonate der Erdalkalimetalle, Silikate mit einem $SiO_2$-Gehalt > 30 Gew.-%, Kohlenstoff, Glas in Form von Pulvern, Fasern und Perlen sowie organische, vorzugsweise kugelförmigen Partikel mit enger Korngrößen-Verteilung, die vernetzt oder gehärtet sein können, möglich sind.

6. Formkörper nach einem der Ansprüche 1 bis 5, dadurch gekennzeichnet, daß die Inertpartikel einen mittleren Durchmesser im Bereich von 0,001 bis 5 $\mu$m, vorzugsweise von 0,05 bis 2,5 $\mu$m, besitzen und in einer Konzentration im Bereich von 0,005 bis 5 Gew.-%, bei molekular orientierten flächigen Formkörpern wie Folien vorzugsweise im Bereich von 0,01 bis 1 Gew.-% enthalten sind.

7. Verfahren zur Herstellung eines selbsttragenden, flächigen Formkörpers gemäß einem der Ansprüche 1 bis 6, nach dem das Polymer zusammen mit den inerten Zusatzmitteln in gelöster oder geschmolzener Form mittels eines Fließers oder einer Düse in ein flächiges Gebilde überführt wird, dadurch gekennzeichnet, daß das flächige Gebilde vor oder nach Entfernung des restlichen Lösungsmittels bzw. in über die Glastemperatur erwärmtem Zustand mit wenigstens einer Walze in Berührung gebracht wird, die auf ihrer Oberfläche eine Vielzahl von regelmäßigen Strukturen weitgehend gleichmäßiger Konfiguration mit einem Längen-zu-Breitenverhältnis von

$$0,05 \quad \leq \quad \frac{d_{min}}{d_{max}} \leq 1$$

aufweist und deren Einzelstrukturen eine Höhe im Bereich von 0,5 bis 100 $\mu$m und eine größte Ausdehnung in der die Walzenoberfläche beschreibenden Ebene von weniger als 300 $\mu$m besitzt.

**8.** Verfahren nach Anspruch 7, dadurch gekennzeichnet, daß das Polymere durch eine Breitschlitzdüse extrudiert, auf einer Kühlwalze abgeschreckt und anschließend in Längs- und Querrichtung gestreckt und hitzefixiert wird, wobei der Kontakt mit der strukturierten Walze im unverstreckten Zustand, zwischen den einzelnen Streckstufen oder vor, während oder nach der Fixierung erfolgt.

**Claims**

**1.** Self-supporting planar molding of a polymeric material containing at least one inert additive in an amount ranging from 0.001 to 5 % by weight, characterized in that at least one surface of the molding exhibits a primary structure formed of the polymers of the molding, with individual elevations which are caused by the inert additive protruding from the primary structure in random distribution, said primary structure having a height of 0.01 to 15 $\mu$m, preferably 0.1 to 5.0 $\mu$m, above the lowest areas of the respective surface and comprises unit cells arranged in the longitudinal and transverse directions which are preferably interconnected and are substantially uniform in configuration, the average diameter of the unit cells

$$d_m = \frac{d_{max} + d_{min}}{2}$$

where

$d_{max}$ = diameter of the unit cell at the widest place and

$d_{min}$ = diameter of the unit call at the narrowest place,

being in the range from 10 to 800 $\mu$m, preferably in the range from 20 to 400 $\mu$m, and the ratio of minimum diameter to maximum diameter of the unit cells being in the range from

$$0.1 \leq \frac{d_{min}}{d_{max}} \leq 1.$$

**2.** The molding as claimed in claim 1, characterized in that it has the form of a film or a plate and is built up from natural and/or synthetic polymers selected from the group consisting of cellulose, cellulose ester, polyvinyl chloride, polystyrene, styrene copolymers, polycarbonate, olefin polymers and copolymers such as ethylene, propylene, butylene, methyl pentene etc., polysulfone, aliphatic and aromatic polyesters, polyimides, polyisobutylene, polymethylmethacrylate, polyphenylene sulfide, polyurethane, polyamide, polyarylether ketone, polyaryletherether ketone, polyarylether sulfone, polyamidimide, polyetherimide.

**3.** The molding as claimed in claim 1 or 2, characterized in that it comprises a film of a polyester, in particular a film of polyethylene therephthalate.

10

4. The molding as claimed in any of claims 1 to 3, characterized in that inert additives which can be used comprise inorganic and organic inert particles and also organic, preferably slippage improving substances which can be present in the molding either alone or in combination with one another.

5. The molding as claimed in any of claims 1 to 4, characterized in that inert additives which can be used comprise $SiO_2$, metal oxide particles, in particular metal oxide particles having a spherical configuration and a narrow grain size distribution, sulfates, phosphates and carbonates of alkaline earth metals, silicates having a $SiO_2$ content of >30 % by weight, carbon, glass in the form of powders, fibers or beads and also organic particles, preferably spherical organic particles having a narrow grain size distribution, which can be cross-linked or hardened.

6. The molding as claimed in any of claims 1 to 5, characterized in that the inert particles have an average diameter ranging from 0.001 to 5 $\mu$m, preferably from 0.05 to 2.5 $\mu$m, and are present in a concentration ranging from 0.005 to 5 % by weight, in the case of molecularly oriented planar moldings such as films, preferably ranging from 0.01 to 1 % by weight.

7. Process for producing the self-supporting planar molding as claimed in any of claims 1 to 6, comprising the steps of transforming the polymer together with the inert additives in a dissolved or molten state, by means of a flow extruder or a die, into a planar molding, characterized in that the planar molding, before or after removing the residual solvent and/or when heated above the glass transition temperature, is contacted with at least one roll which has a plurality of regular structures of substantially uniform configuration on its surface showing a ratio length to width of

$$0.05 \leq \frac{d_{min}}{d_{max}} \leq 1$$

and the individual structures of which have a height in the range from 0.5 to 100 $\mu$m and a maximum extension of less than 300 $\mu$m in the plane describing the roll surface.

8. The process as claimed in claim 7, characterized in that the polymer is extruded through a slot die, quenched on a cooling drum and then stretched in the longitudinal and transverse directions and heat-set, the contact with the textured roll taking place in an unstretched state, between the individual stretching steps or before, during or after heat setting.

## Revendications

1. Elément façonné autoportant dans toute son étendue constitué d'un matériau polymérique, lequel contient au moins un adjuvant inerte dans une proportion comprise entre 0,001 et 5 % en poids, caractérisé en ce qu'il présente sur au moins un côté une structure de base constituée des polymères de l'élément façonné, au-dessus de laquelle s'élèvent des protubérances distribuées au hasard dues à la présence de l'adjuvant inerte, ladite structure de base surplombant de 0,01 à 15 $\mu$m, de préférence de 0,1 à 5 $\mu$m, les zones les plus profondes des surfaces respectives et étant constituée de cellules élémentaires, de préférence liées les unes aux autres, disposées dans le sens de la longueur et dans le sens transversal et présentant une grande régularité de configuration dont la dimension moyenne

$$d_m = \frac{d_{max} + d_{min}}{2}$$

$d_{max}$ représentant la dimension de la cellule élémentaire située à l'endroit le plus large,
$d_{min}$ représentant la dimension de la cellule élémentaire située à l'endroit le plus étroit,
est comprise entre 10 et 800 $\mu$m, de préférence entre 20 et 400 $\mu$m, le rapport de la dimension minimale à la dimension maximale étant compris entre

$$0,1 \leq \frac{d_{min}}{d_{max}} \leq 1.$$

2. Elément façonné selon la revendication 1, caractérisé en ce qu'il possède la forme d'une feuille ou d'une plaque et qu'il est constitué de polymères naturels et/ou synthétiques, choisis parmi les cellulose, ester de cellulose, polychlorure de vinyle, polystyrène, copolymères du sryrène, polycarbonate, polymères et copolymères d'oléfines avec l'éthylène, le propylène, le butylène, le methylpentène, etc., polysulfone, polyester aliphatique et aromatique, polyimide, polyisobutylène, polyméthacrylate de méthyle, des polysulfure de phénylène, polyuréthane, polyamide, polyaryléthercétone, polyarylétheréthercétone, polyaryléthersulfone, polyamidimide, polyétherimide.

3. Elément façonné selon la revendication 1 ou la revendication 2, caractérisé en ce qu'il est une feuille de polyester, en particulier de polytéréphtalate d'éthylène.

4. Elément façonné selon l'une des revendications 1 à 3, caractérisé en ce qu'il est possible d'utiliser en tant qu'adjuvant inerte des particules organiques ou minérales inertes telles que des agents favorisant le glissement, qui peuvent être présentes dans l'élément façonné seules ou en combinaison.

5. Elément façonné selon l'une des revendications 1 à 4, caractérisé en ce qu'il est possible d'utiliser en tant qu'adjuvant inerte du $SiO_2$, des particules d'oxyde métallique en particulier de configuration sphérique et présentant une distribution étroite autour d'un diamètre moyen, des sulfates, phosphates et carbonates de métaux alcalino-terreux, des silicates présentant une teneur en $SiO_2$ supérieure à 30 % en poids, du carbone, du verre sous la forme de poudre, fibre et perle telles que des particules organiques, de préférence sphériques et présentant une distribution étroite autour d'un diamètre moyen, lesquelles peuvent être réticulées ou durcies.

6. Elément façonné selon l'une des revendications 1 à 5, caractérisé en ce que les particules inertes possèdent une dimension moyenne comprise entre 0,001 et 5 $\mu$m, de préférence entre 0,05 et 2,5 $\mu$m, et sont contenues dans une concentration comprise entre 0,005 et 5 % en poids, et dans des éléments faconnés dont la surface est orientée suivant les molécules par exemple sous forme de feuilles de préférence entre 0,01 et 1 % en poids.

7. Procédé pour la préparation d'un élément façonné autoportant mince selon l'une des revendications 1 à 6, selon lequel on transfère, au moyen d'un récipient verseur ou d'une buse, le polymère associé aux adjuvants inertes à l'état dissous ou fondu, de façon à ce qu'il prenne une forme aplatie, caractérisé en ce que la forme aplatie est mise en mouvement au moyen d'au moins un laminoir, avant ou après élimination des solvants résiduels, dans des conditions de température telles que la température soit supérieure à la température de transition vitreuse, ledit laminoir présentant sur sa surface un grand nombre de structures régulières de configuration très régulière, le rapport de la longueur à la largeur étant tel que

$$0,05 \leq \frac{d_{min}}{d_{max}} \leq 1$$

et chacune desdites structures particulières ayant une hauteur comprise entre 0,5 et 100 $\mu$m et une grande dimension selon le plan décrit par la surface du laminoir de moins de 300 $\mu$m.

8. Procédé selon la revendication 7, caractérisé en ce que le polymère est filé au moyen d'une buse à large fente, est trempé sur un laminoir de refroidissement, et ensuite est étiré et thermofixé dans le sens de la longeur et dans le sens transversal, le polymère étant en contact avec le laminoir structuré en état non-tiré, entre les différentes étapes d'étirage oubien avant, pendant ou après la fixation.

STRECKSPALT 1

STRECKSPALT 2

Fig. 1

EP 0 483 676 B1